# EUROPEAN PATENT SPECIFICATION

(11) **EP 1 073 183 B1**
(45) Date of publication and mention of the grant of the patent: **16.08.2006**
(21) Application number: 00113848.6
(22) Date of filing: 30.06.2000
(51) Int. Cl.: H02K 49/04

(54) **Eddy-current deceleration apparatus**
Wirbelstrom-Bremsgerät
Dispositif de ralentissement à courant de Foucault

(30) Priority: 29.07.1999 JP 21471799
(43) Date of publication of application: 31.01.2001
(73) Proprietor: Isuzu Motors Limited, Shinagawa-ku, Tokyo (JP)
(72) Inventor: Kuwahara, Tohru, c/o Isuzu Motors Limited, Kawasaki-shi, Kawasaki-ken (JP)
(74) Representative: Niedmers, Ole

(56) References cited:
- EP-A- 0 860 934
- PATENT ABSTRACTS OF JAPAN vol. 1998, no. 09, 31 July 1998 (1998-07-31) -& JP 10 098867 A (HITACHI METALS LTD), 14 April 1998 (1998-04-14)
- PATENT ABSTRACTS OF JAPAN vol. 1999, no. 04, 30 April 1999 (1999-04-30) -& JP 11 004572 A (ISUZU MOTORS LTD), 6 January 1999 (1999-01-06) & EP 1 005 144 A (ISUZU MOTORS LTD) 31 May 2000 (2000-05-31)
- PATENT ABSTRACTS OF JAPAN vol. 1998, no. 10, 31 August 1998 (1998-08-31) & JP 10 127039 A (ISUZU MOTORS LTD), 15 May 1998 (1998-05-15)

## Description

The present invention relates to an eddy-current deceleration apparatus for assisting a frictional brake of a vehicle, and particularly to an eddy-current deceleration apparatus which is simple in manufacturing and which is provided with a guide tube for protecting magnets.

In a conventional eddy-current deceleration apparatus provided with one or plural magnet support tubes, a relatively thick (approximately 10 to 16 mm) magnetic plate (a ferromagnetic plate) has to be used for a guide tube formed of a nonmagnetic substance for receiving the magnet support tubes in order to prevent the magnetic flux from the magnets (a permanent magnets; the same is true hereinafter) from leaking outside. To accomplish the above, a magnetic plate is cast into the guide tube body formed of aluminum, or a guide tube is formed by a mold press from stainless steel plate as a nonmagnetic material and magnetic plates (ferromagnetic plates, pole pieces) are fitted into a number of openings provided in the guide tube and connected by welding. In the former method, there is a difficulty in terms of manufacturing, and the yield or available percentage of an aluminum cast product as a guide tube is poor. Further, according to the former method, the connecting strength between the magnetic plate and the aluminum body as the guide tube is so weak that an impregnating material or the like is filled in the clearance. Further, the cost increases because of a machining allowance, when the outer peripheral surface of the guide tube opposite to the inner peripheral surface of the brake drum and the inner peripheral surface opposite to the magnets of the magnet support tube are subjected to smooth machining, is large. Also in the latter method, it is difficult to reduce the cost of manufacturing since the magnetic plates are welded to the guide tube.

EP-A-0 860 934 discloses an apparatus comprising the features of the preamble of claim 1.

In view of the aforementioned problems, the present invention is to provide an eddy-current deceleration apparatus which is simple in manufacturing and inexpensive, in which a guide tube is constituted of stainless steel, a portion corresponding to a magnetic plate is left or remained, and a nonmagnetic or weak magnetic portion is formed by heat treatment.

For solving the aforementioned problem, according to the present invention, there is provided an eddy-current deceleration apparatus according to independent claim 1. Preferred embodiments of the invention are defined on the dependent claims.

An outer guide tube for covering a magnet support tube is manufactured from a seamless steel pipe formed of martensite stainless steel having a wall thickness of 10 to 16 mm as a magnetic material or a steel pipe subjected to roll molding from the steel plate. Portions opposite to magnets of the outer guide tube (portions corresponding to the magnetic plate) are left as the magnetic material, and portions not opposite to the magnets (portions opposite to a clearance between the magnets) are locally rapidly cooled from a state heated to a high temperature of 800 to 1350 degree in Centigrade (in a partial solution state) into nonmagnetism or weak magnetism to form a nonmagnetic portion or a weak magnetic portion so that the magnetic field from the magnets effectively arrives at the brake drum without magnetic short-circuiting (magnetic short) in the outer guide tube during braking. The stainless steel as the magnetic material includes, for example, 13 chromium (Cr) stainless steel, 17 chromium (Cr) ferrite stainless steel, and the like.

Further, the steel pipe or tube formed of stainless steel as a magnetic material is cut out to form an outer guide tube so that thick portions (magnetic plates, thickness of 10 to 16 mm) opposite to magnets and thin portions not opposite to magnets are arranged alternately in a peripheral direction. Making use of the characteristics of the stainless steel as a magnetic material, the thin portions not opposite to the magnets are heated to a high temperature state in excess of 800 degree in Centigrade (in a partial solution state) and subsequently rapidly cooled into a nonmagnetic or weak magnetic austenite phase. Since the thick portions maintain the characteristics as a magnetic material, and the thin portions are formed into the nonmagnetic material or weak magnetic material, the operation and effect similar to the conventional outer guide tube can be obtained, and in addition, a degree of occurrence of inferior articles is small, and the weight is conveniently reduced, in manufacturing.

In place of machining the thin portions from the thick plates of stainless steel, which is a magnetic material, as a guide tube, there can be employed alternatively a method in which thick portions of magnetic plates opposite to magnets and thin portions not opposite to magnets are formed by casting or forging on a pipe of stainless steel as a magnetic material, and the thin portions are heated to a high temperature state in excess of 800 degree in Centigrade (in a partial solution state) and subsequently rapidly cooled into a nonmagnetic or weak magnetic austenite phase.
- Fig. 1: is a front sectional view of an eddy-current deceleration apparatus to which the present invention is applied.
- Fig. 2: is a side sectional view showing main parts of the eddy-current deceleration apparatus.
- Fig. 3: is a side sectional view showing a partly modified embodiment of the eddy-current deceleration apparatus.
- Fig. 4: is a side sectional view showing a partly modified embodiment of the eddy-current deceleration apparatus.
- Fig. 5: is a side sectional view showing a partly modified embodiment of the eddy-current deceleration apparatus.
- Fig. 6: is a side sectional view of an eddy-current deceleration apparatus according to a second embodiment of the present invention.
- Fig. 7: is a side sectional view of an eddy-current deceleration apparatus according to a third embodiment of the present invention.
- Fig. 8: is a side sectional view showing an eddy-current deceleration apparatus of the other type to which the present invention is applied.
- Fig. 9: is a side sectional view showing a braking state of the eddy-current deceleration apparatus, shown in Fig. 8.
- Fig. 10: is a side sectional view showing a partly modified embodiment of the eddy-current deceleration apparatus.
- Fig. 11: is a side sectional view showing a partly modified embodiment of the eddy-current deceleration apparatus.
- Fig. 12: is a side sectional view showing a partly modified embodiment of the eddy-current deceleration apparatus.
- Fig. 13: is a side sectional view of an eddy-current deceleration apparatus according to a fourth embodiment of the present invention.
- Fig. 14: is a side sectional view of an eddy-current deceleration apparatus according to a fifth embodiment of the present invention.
- Fig. 15: is a side sectional view showing an eddy-current deceleration apparatus of another type to which the present invention is applied.
- Fig. 16: is a front sectional view showing an eddy-current deceleration apparatus of another type to which the present invention is applied.
- Fig. 17: is a front sectional view of an eddy-current deceleration apparatus according to a sixth embodiment of the present invention.
- Fig. 18: is a side sectional view of the eddy-current deceleration apparatus, shown in Fig. 17.
- Fig. 19: is a side sectional view a partly modified embodiment of the eddy-current deceleration apparatus.
- Fig. 20: is a side sectional view showing a partly modified embodiment of the eddy-current deceleration apparatus.
- Fig. 21: is a side sectional view showing a partly modified embodiment of the eddy-current deceleration apparatus.
- Fig. 22: is a side sectional view showing a partly modified embodiment of the eddy-current deceleration apparatus.

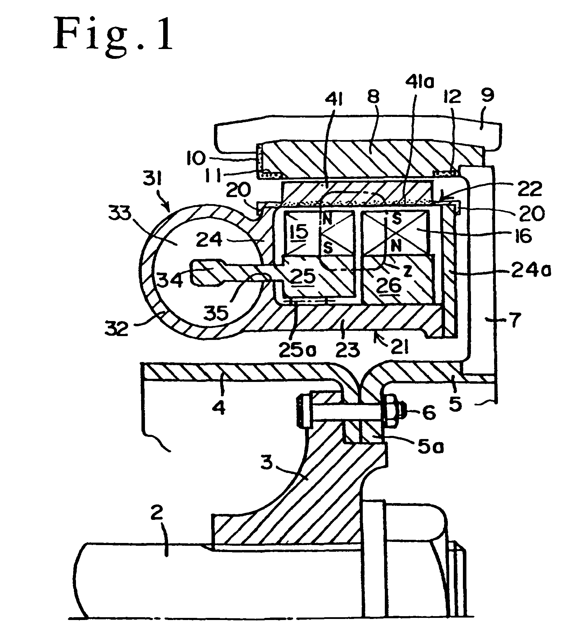

As shown in Fig. 1, in the eddy-current deceleration apparatus, for example, a flange 5a of boss portion 5 of a brake drum 8 and an end wall plate of a brake drum 4 of a parking brake are fastened together to a mounting flange 3 spline-fitted in an output rotational shaft 2 of a vehicular speed change gear by means of a plurality of bolts 6 and nuts. A base end portion or a right end portion of the brake drum 8 provided with a number of cooling fins 9 in the outer peripheral surface thereof is connected by welding or the like to the extreme ends of a number of support arms 7 projecting radially and outwardly from the boss portion 5. An annular member or an annular plate 10 formed of a good conductor such as copper is connected to the end wall surface of an open end portion or a left end portion of the brake drum 8, and an annular member or an annular plate 11 integral with the annular plate 10 is connected to the left end portion not opposite to a magnetic plate (a pole piece) 41 of the inner peripheral surface of the brake drum 8. A similar annular member or an annular plate 12 is connected also to the right end portion not opposite to the magnetic plate 4 of the inner peripheral surface of the brake drum 8. The annular plates 10 to 12 cause an eddy current flowing through the brake drum 8 to have the axial spread to increase the brake torque.

The brake drum 8 is internally provided with a guide tube 21 having a rectangular (in section) hollow portion. The guide tube 21 has an L-shape (in section) tubular portion having a side wall 23 and an inner guide tube 23 formed of a nonmagnetic material, an annular plate or a side wall 24a formed of a nonmagnetic material and an outer guide tube 22 formed of 13 chromium stainless steel, the opposite edge portions 20 of the outer guide tube 22 being preferably bent radially and inwardly. The side wall 24a is connected to the inner guide tube 23 by means of a plurality of bolts and the outer guide tube 22 is secured its opposite edge portions 20 to the side walls 24, 24a by means of a plurality of bolts.

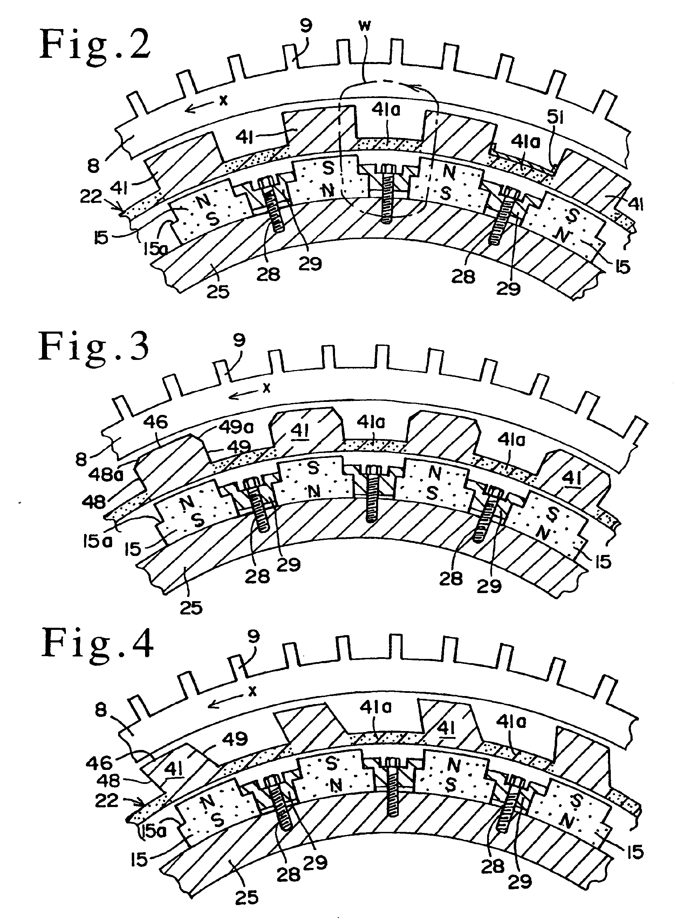

The outer guide tube 22 is formed integrally a number of thick portions 41 and thin portions 41a corresponding to the magnetic plate against the inner peripheral surface of the brake drum 8 from stainless steel as a magnetic material, for example 13 chromium (Cr) stainless steel, the thick portions 41 and the thin portions 41a being disposed alternately in a peripheral direction. More specifically, as shown in Fig. 2, the outer peripheral wall of the outer guide tube 22 is cut out to form the thin portions 41a leaving the thick portions (portions corresponding to the magnetic plate (pole piece)) 41 having a fixed peripheral dimension in the outer guide tube 22 having a fixed thickness. Each thin portion 41a is heated to a temperature above 800 degree in Centigrade and then rapidly cooled into a nonmagnetic or weak magnetic austenite phase. Preferably, a U-shape (in section) reinforcing plate 51 formed of a nonmagnetic material is fastened to the thin portion 41a. However, in place of machining the thin portions 41a from the outer guide tube 22, there can be employed a method in which a number of thick portions 41 and thin portions 41a are formed integrally by casting or forging of, for example, 13 chromium stainless steel as a magnetic material. The peripheral dimension of the thick portion 41 is made longer than that of the thin portion 41a. The thick portions 41 are arranged in a peripherally equal spaced relation. In other words, an area of the outer surface of the thick portion 41 is made narrower than that of the inner surface.

The hollow portion of the guide tube 21 receives therein a movable magnet support tube 25 made of a magnetic material and an immovable magnet support tube 26. The movable magnet support tube 25 is supported reversibly rotatably on the inner guide tube 23 by a bearing 25a, and the magnet support tube 26 is secured to the inner guide tube 23 by means of bolts or the like. A number of magnets 15, 16 opposite to the thick portions 41 are connected to the outer peripheral surfaces of the magnet support tubes 25, 26 in a peripherally equal spaced relation and so that polarities opposite to the thick portions 41 are different alternately in a peripheral direction.

In a fluid pressure actuator 31 for reversibly rotating the movable magnet support tube 25, a piston 33 is fitted into a cylinder 32 formed integral with the side wall 24 to define both end chambers, and the outer end of a rod extented from the piston 33 is connected to an arm 34 projecting outward via a slit 35 of the side wall 24 from the magnet support tube 25.

In the aforementioned eddy-current deceleration apparatus, at the non-braking time, the polarities of the magnets 15 of the magnet support tube 25 and the magnets 16 of the magnet support tube 26 arranged axially to the thick portions 41 are in a state reversed to each other, and as shown in Fig. 1, a short-circuiting magnetic circuit z is generated between the magnet support tubes 25, 26 and the thick portions 41. Accordingly, since the magnetic fields of the magnets 15, 16 do not reach the brake drum 8, the brake torque is not generated in the brake drum 8. At the braking time, when the magnet support tube 25 is rotated by an arranging pitch of the magnets 15 by the fluid pressure actuator 31, the polarities of the magnets 15, 16 of the magnet support tube 25, 26 arranged axially to the common thick portion 41 become the same. Accordingly, when the rotating brake drum 8 transverses the magnetic fields from the magnets 15, 16, the brake torque based on the eddy current occurs in the brake drum 8. At that time, the magnetic circuit w is generated between the brake drum 8 and the magnet supports tubes 25, 26, as shown in Fig. 2.

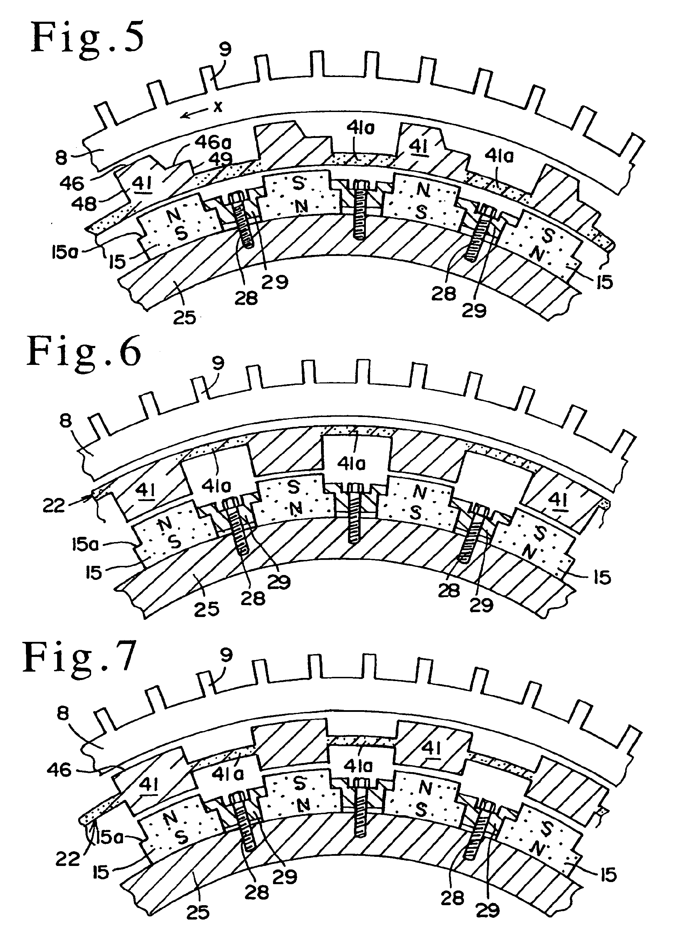

However, actually, since the magnetic circuit w takes a form of being dragged in the rotating direction indicated by arrow x of the brake drum 8 during high speed rotation of the brake drum 8, it is preferable to make the shape of the side (in section) of the thick portion 41 the shape as shown in Fig. 3 in the middle speed rotational area of the brake drum 8 rather than the rectangle, and preferable to have the shape as shown in Figs. 4 and 5 in the high speed rotational area of the brake drum 8, as will be described later.

In the embodiment shown in Fig. 3, the outer peripheral portion of the front end surface (the end surface forward in the rotating direction of the brake drum 8) 48 of the thick portion 41 is cut out to form an inclined surface 48a, and similarly, the outer peripheral portion of the rear end surface 49 of the thick portion 41 is cut out to form an inclined surface 49a. The magnetic flux from the magnets 15, 16 can be drawn (the magnetic flux density can be increased) by the thick portion 41 of the outer guide tube 22 and guided to the brake drum 8 to increase the brake torque. In the embodiment shown in Fig. 4, the front end surface 48 and the rear end surface 49 of the thick portion 41 are inclined in the rotating direction shown by arrow x to constitute a parallelogram, whereby the magnetic flux from the magnets 15, 16 in the high speed rotation of the brake drum 8 can be drawn into the front end portion (the rotating direction of the brake drum 8) of the thick portion 41. In the embodiment shown in Fig. 5, the rear half portion of the outer surface 46 of the thick portion 41 is cut to form shoulder 46a, and the magnetic flux from the magnets 15, 16 in the high speed rotation of the brake drum 8 can be further drawn into the front end portion of the thick portion 41 and reached the brake drum 8.

As shown in Fig. 2, the magnets 15 are superposed to the outer peripheral surface of the magnet support tube 25, the holder 29 is sandwiched between the magnets 15 adjacent to each other in the peripheral direction, and the holder 29 is superposed to the shoulder 15a formed on the front and rear end walls of the magnets 15 and fastened to the magnet support tube 25 by bolts 28.
The magnets 16 are similarly connected to the magnet support tube 26.

In the embodiment shown in Fig. 6, reversely to the embodiments shown in Figs. 3 to 5, a thick portion 41 is provided on the inner peripheral surface of the outer guide tube 22, a groove is provided in the inner peripheral surface of the outer guide tube 22, and a thin portion 41a is formed between the thick portion 41 and the thick portion 41. In the embodiment shown in Fig. 7, a thin portion 41a is provided between the outer peripheral surface and the inner peripheral surface of the outer guide tube 22.

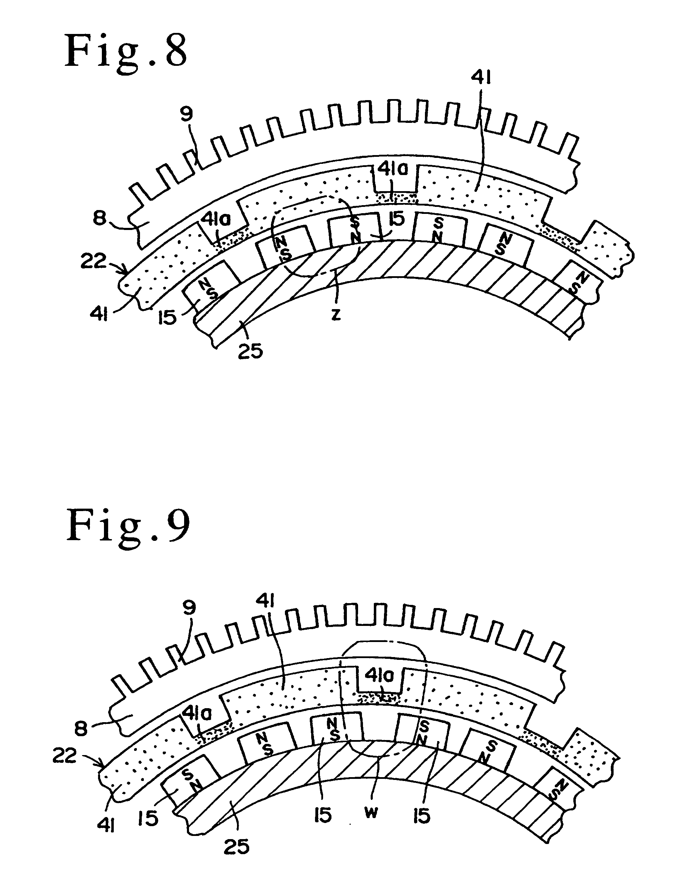

While in the embodiments shown previously, the movable magnet support tube 25 and the immovable magnet support tube 26 are housed in the hollow portion of the guide tube 21, it is noted that the present invention can be applied to an eddy-current deceleration apparatus in which only the movable magnet support tube 25 is housed in the hollow portion of the guide tube 21. As shown in Fig. 8, the thin portions 41a of the outer guide tube 22 formed of stainless steel as a magnetic material are heated to a high temperature state above 800 degree in Centigrade (partial solution state) and subsequently rapidly cooled into a nonmagnetic or weak magnetic austenite phase. In the outer peripheral surface of the magnet support tube 25, connection is made so that two magnets 15 are opposed to the thick portion 41, and polarities of the two magnets 15 opposite to the thick portion 41 are different in alternation. At the braking time, two magnets 15 different in polarity arranged in the peripheral direction are opposed to the thick portions 41, the short-circuiting magnetic circuit z occurs between the common thick portions 41 and the magnet support tube 25, as shown in Fig. 8, and no magnetic field reaches the brake drum 8. At the braking time, when the magnet support tube 25 is rotated by an arranging pitch of the magnets 15, the magnetic circuit w occurs between the brake drum 8 and the magnet support tube 25, as shown in Fig. 9, and the brake torque occurs in the brake drum.

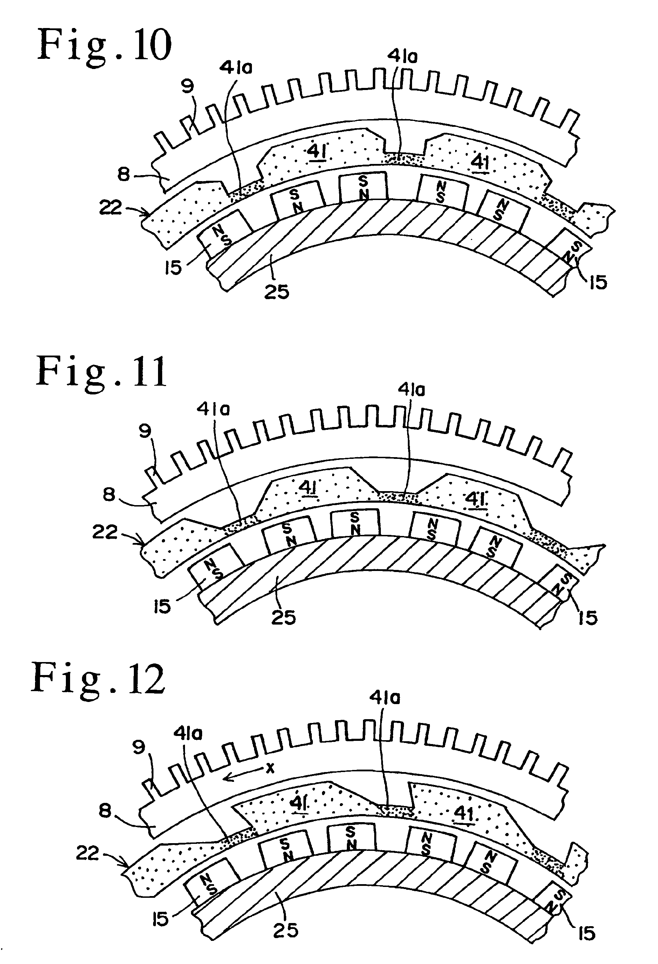

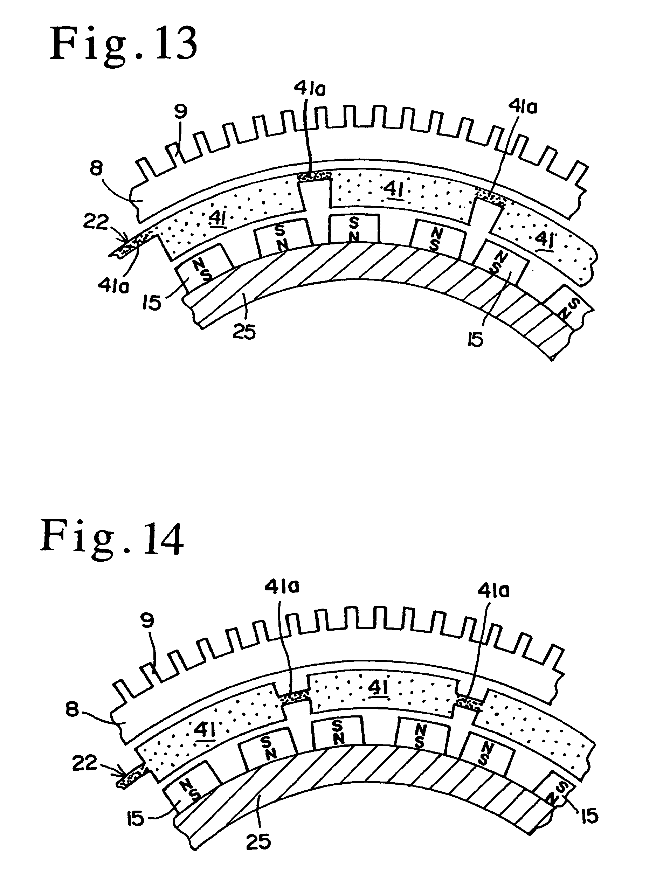

As shown in Figs. 10 to 12, in the outer guide tube 22 formed of stainless steel as a magnetic material, the sectional shape of the side of the thick portion 41 can be changed similarly to the embodiments shown in Figs. 3 to 5 according to the rotational speed regularly used in the brake drum 8. Further, the thin portions 41a of the outer guide tube 22, which are heated to a high temperature state above 800 degree in Centigrade (partial solution) and subsequently rapidly cooled into a nonmagnetic or weak magnetic austenite phase, may be provided on the outer peripheral portion of the outer guide tube 22 as shown in Fig. 13, or provided between the outer peripheral portion and the inner peripheral portion as shown in Fig. 14.

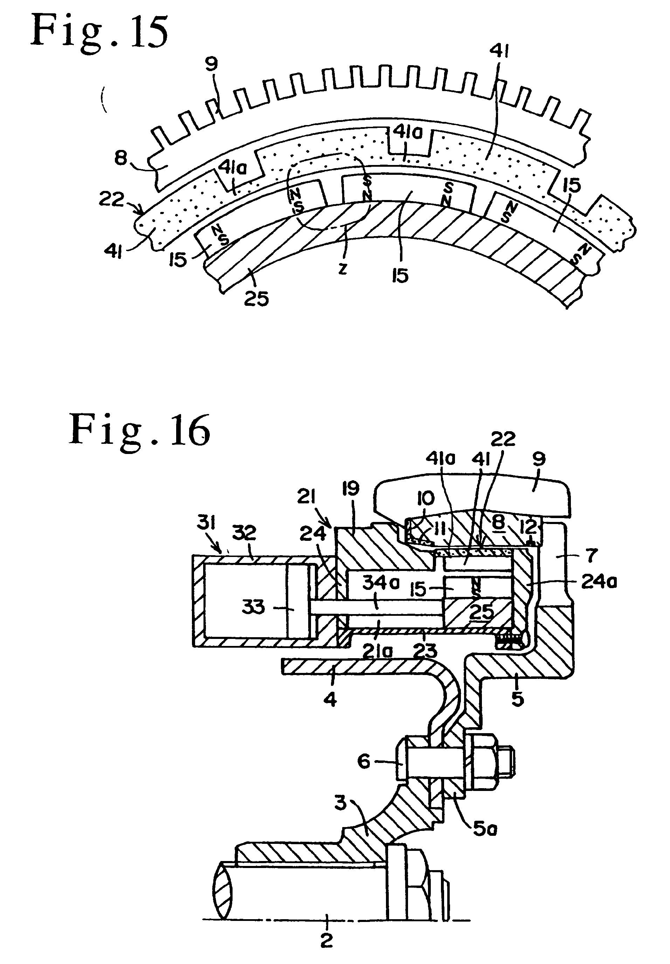

In the embodiment shown in Fig. 15, only the movable magnet support tube 25 is received in the hollow portion of the guide tube 21, and the magnets 15 which oppose to the thick portions 41 and polarities of magnets 15 are different alternately in the peripheral direction are connected to the outer peripheral surface of the magnet support tube 25. At the braking time, the magnet support tube 25 is rotated by a half arranging pitch of the magnets 15 from the same related position as that shown in Fig. 2, that is, a braking position in which the magnets 15 wholly oppose to the thick portions 41, and two magnets 15 different in polarity arranged in the peripheral direction partly oppose to a common thick portion 41. Then, a short-circuiting magnetic circuit z occurs between the magnet support tube 25 which holds the inner and outer surfaces of two magnets and the thick portions 41, and no magnetic field reaches the brake drum 8.

As shown in Fig. 16, the present invention can be also applied to an eddy-current deceleration apparatus of the type in which the magnet support tube 25 is switched between the braking position being drawn into the brake drum 8 by the fluid pressure actuator 31 and the non-braking position being drawn out of the brake drum 8. The guide tube 21 is formed a rectangular (in section) hollow portion 21a from an outer guide tube 19 formed of a soft magnetic material, a side wall 24, an inner guide tube 23 formed of a non- magnetic material, an outer guide tube 22 of stainless steel as a magnetic material and a side wall 24a of non-magnetic material. A number of magnetic plates or thick portions 41 are formed in a peripherally equal spaced relation in the inner peripheral surface of the outer guide tube 22, and a thin portion 41a between the thick portions 41 is heated to a high temperature state above 800 degree in Centigrade (partial solution state) and subsequently rapidly cooled into a nonmagnetic or weak magnetic austenite phase. The magnet support tube 25 for connecting the magnets 15 opposite to the thick portions 41 is housed in the hollow portion 21a. The magnet support tube 25 is supported on the the inner guide tube 23 so as to reciprocate along the inner guide tube 23. A rod 34a is extended to the hollow portion 21a through the side wall 24 from the piston 33 of the fluid pressure actuator 31 and is connected to the magnet support tube 25. The fluid pressure actuator 31 is different from that shown in Fig. 16 in that the cylinder 32 is disposed axially of the brake drum 8, and the end wall is connected to the side wall 24. The brake drum 8 is similar to that shown in Fig. 1. When at the non- braking time, the magnet support tube 25 is drawn out of the braking position shown in Fig. 16 to outside of the brake drum 8, a short-circuiting magnetic circuit is formed between the outer guide tube 19 and the magnet support tube 25, and no magnetic field reaches the brake drum 8.

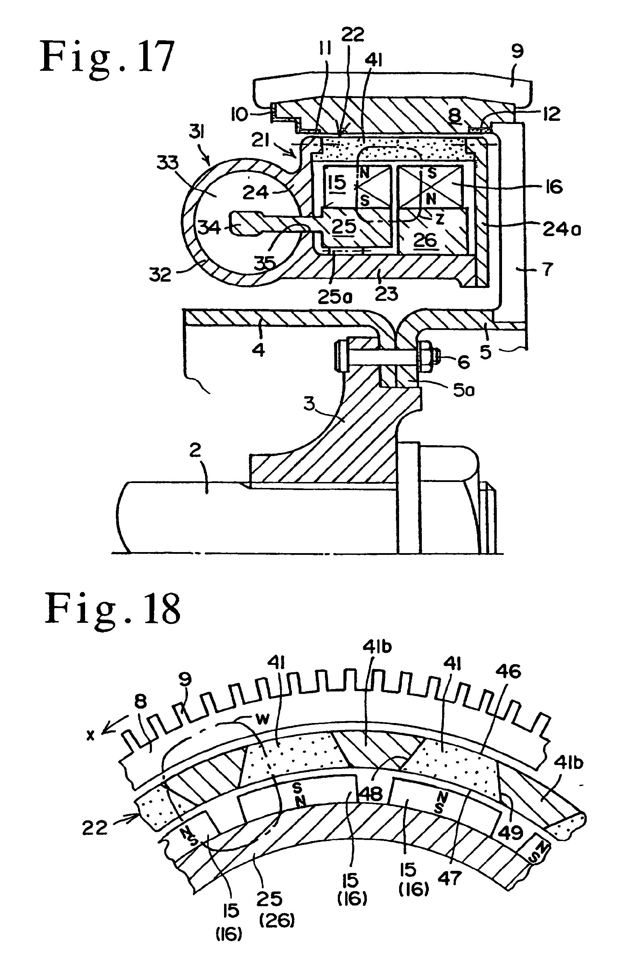

In the embodiments shown in Figs. 17 to 22, the outer guide tube 22 is manufactured from a steel pipe obtained by roll molding and welding a plate of martensite stainless steel or ferrite stainless steel as a magnetic material having a thickness of approximately 10 to 16 mm, or a seamless steel pipe or a ferrite stainless steel pipe as a magnetic material having a thickness of approximately 10 to 16 mm. As shown in Fig. 17, preferably, the outer guide tube 22 is connected by a plurality of bolts (not shown) between the side wall 24 and the side wall 24a of the guide tube 21 formed of a nonmagnetic material such as aluminum. Other constitutions as the eddy-current deceleration apparatus are similar to those shown in Fig. 1. As shown in Fig. 18, the outer guide tube 22 is formed from a stainless steel pipe as a magnetic material, having a uniform thickness, and magnetic portions 41 opposite to the magnets 15, 16 is left as a magnetic material and portions 41b not opposite to the magnets 15, 16 (a portion opposite to a clearance between the magnets) is locally heated to a high temperature of 800 to 1350 degree in Centigrade (partial solution state) and subsequently rapidly cooled into a nonmagnetic or weak magnetic austenite phase.

For obtaining roundness of the outer guide tube 22, the outer guide tube 22 is subjected to finishing and subsequently applied with coating for rust prevention. Preferably, a depression or a groove is formed in the outer surface of the nonmagnetic or weak magnetic portion 41b of the outer guide tube 22 so as to visualize the magnetic portion 41 and the nonmagnetic or weak magnetic portion 41b. The outer surface 46 of the magnetic portion 41 is made smaller in area or peripheral dimension than the inner surface 47 opposite to the magnets 15, 16. That is to say, a side section of the magnetic portion 41 is made to be trapezoidal to increase the magnetic flux density from the magnets 15, 16 to the brake drum 8 to increase the braking torque.

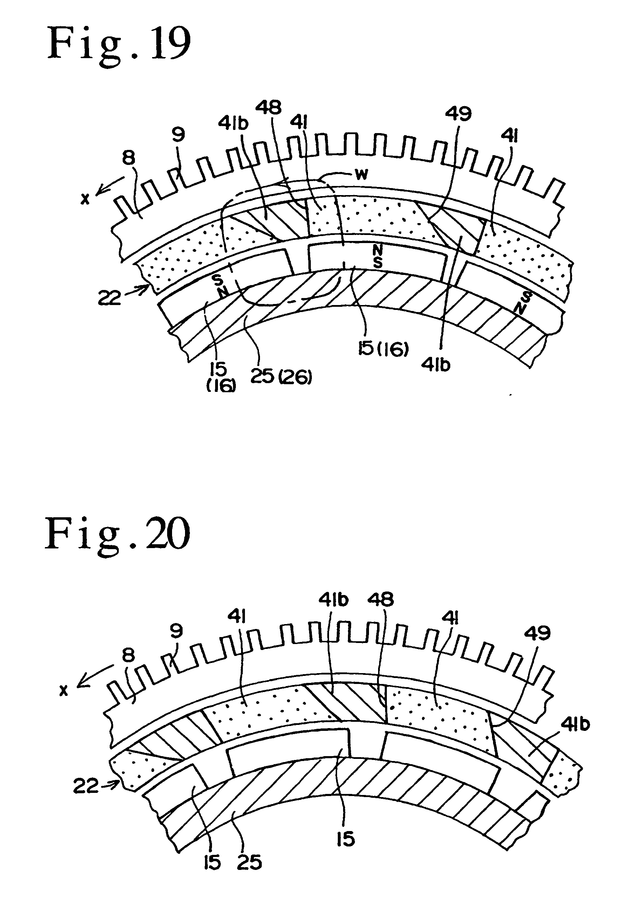

In the embodiment shown in Fig. 19, the magnetic circuit w formed between the brake drum 8 and the magnet support tubes 25, 26, at the braking time in the high speed rotational area of the brake drum 8, tends to flow in the rotational direction indicated by arrow x of the brake drum 8, in other words, the density of the magnetic flux from the magnets 15, 16 to the brake drum 8 tends to be concentrated on the front end portion of the magnetic portion 41, and therefore, preferably, the rear end surface 49 of the magnetic portion 41 is inclined in the rotational direction of the brake drum 8. As shown in Fig. 20, preferably, the front end surface 48 of the magnetic portion 41 is also inclined slightly in the rotational direction (arrow x) of the brake drum 8.

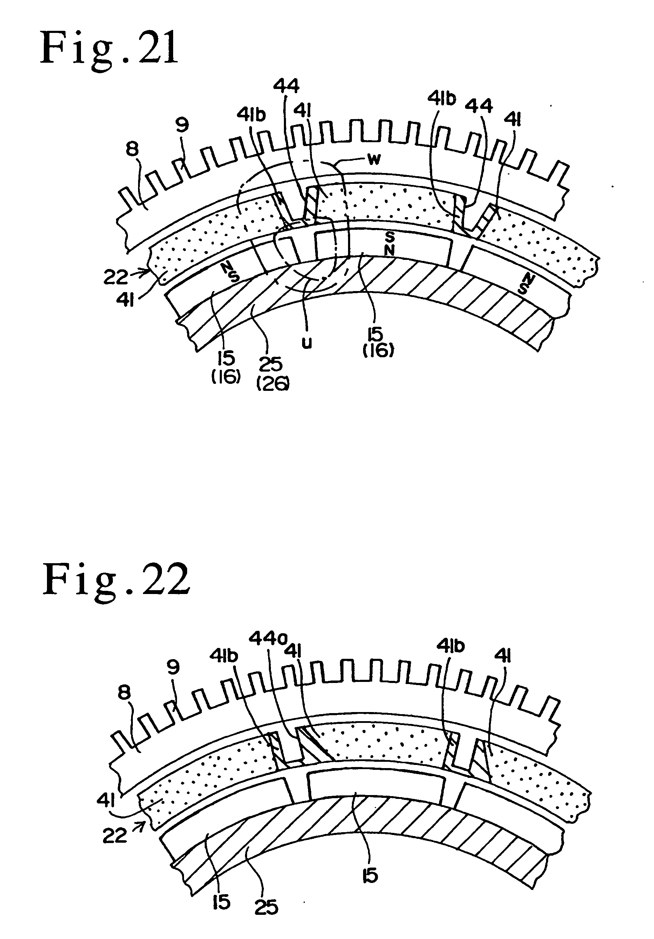

In the embodiment shown in Fig. 21, a stainless steel pipe as a magnetic material is subjected to heat treatment to form a nonmagnetic or weak magnetic portion 41b, after which a V-shaped axial groove 44 is machined in the outer peripheral surface of the nonmagnetic or weak magnetic portion 41b. The nonmagnetic or weak magnetic portion 41b is not to be nonmagnetic completely by the heat treatment as strictly speaking, it is of weak magnetism. Therefore, The nonmagnetic or weak magnetic portion 41b is provided with a groove 44. The thicknesses of the side wall and the bottom wall of the groove 44 are substantially equal so that the thickness of the nonmagnetic or weak magnetic portion 41b is made thin to thereby suppress formation of leaked magnetic circuits or short-circuiting magnetic circuits u via the nonmagnetic or weak magnetic portion 41b of a part of magnetic flux from the magnets 15, 16 to the brake drum 8, at the braking time. As shown in Fig. 22, a rectangular (in section) groove 44a may be provided according to the sectional shape of the nonmagnetic or weak magnetic portion 41b in place of the V-shaped groove.

In the embodiments shown in Figs. 17 to 22, as the outer guide tube 22, the stainless steel pipe thickness of which is equal as a magnetic material is subjected to heat treatment to form the nonmagnetic or weak magnetic portion 41b and the magnetic portion 41. Therefore, less heat distortion caused by the heat treatment of the outer guide tube 22, and the machining properties of the nonmagnetic or weak magnetic portion 41b are improved, thus facilitating the machining of the grooves 44 and 44a. The dimensional accuracy of the inner and outer peripheral surfaces of the outer guide tube 22 is excellent as compared with the case where the thin portion is subjected to heat treatment after the outer guide tube 22 has been formed in advance with the thick portion and thin portion.

Since the outer guide tube 22 can be processed from a tubular member formed of simple stainless steel, the manufacturing cost can be saved considerably.

The outer guide tube 22 is formed with the nonmagnetic or weak magnetic portion 41b whereby the magnetic field from the magnets 15, 16 effectively arrives at the brake drum 8 without being short-circuited at the outer guide tube 22, at the braking time. Particularly, since the nonmagnetic or weak magnetic portion 41b on the outer guide tube 22 is not completely nonmagnetized by the heat treatment but has the weak magnetism, when the nonmagnetic or weak magnetic portion 41b is provided with the groove 44 or 44a to make the thickness of the nonmagnetic or weak magnetic portion 41b thin, it is useful to prevent a leakage of magnetism.

As described above, according to the present invention, there is provided an eddy-current deceleration apparatus according to claim 1.

Therefore, the processing of the guide tube is simple. Further, as compared with the prior art in which the magnetic plate is casted into the outer guide tube formed of aluminum or the like, the yield is improved, the processing cost can be reduced, and the apparatus is conveniently light-weighted.

An area of the outer surface of the magnetic portion opposite to the inner peripheral surface of the brake drum is made narrower than that of the inner surface of the magnetic portion opposite to the magnet on the magnet support tube whereby the density of magnetic flux from the magnets to the brake drum increases, and the braking torque increases.

An annular plate formed of a good conductor such as copper is connected to at least one end, not opposite to the outer guide tube, of the inner peripheral surface of the brake drum whereby the eddy current flowing through the brake drum spreads axially to increase the braking torque.

### Member list

u: leaked short-circuiting magnetic circuit
w: magnetic circuit
x: arrow
z: short-circuiting magnetic circuit
2: rotational shaft
3: mounting flange
4: brake drum
5: boss portion
5a: flange
6: bolts
7: support arms or spokes
8: brake drum
9: cooling fin
10: annular plate of a good conductor
11: annular plate of a good conductor
12: annular plate of a good conductor
15: magnet
15a: shoulder
16: magnet
19: outer guide tube
20: opposite edge portion
21: guide tube
21a: hollow portion
22: outer guide tube
23: inner guide tube
24: side wall
24a: side wall
25: magnet support tube
25a: bearing
26: magnet support tube
28: bolt
29: holder
31: fluid pressure actuator
32: cylinder
33: piston
34: arm
34a: rod
35: slit
41: thick portion (magnetic portion)
41a: thin portion (nonmagnetic or weak magnetic portion)
41b: nonmagnetic or weak magnetic portion
44: groove
44a: groove
46: outer surface
46a: shoulder
47: inner surface
48: front end surface
48a: inclined surface
49: rear end surface
49a: inclined surface
51: reinforcing plate

## Claims

1. An eddy-current deceleration apparatus, wherein brake force is generated in the brake drum (8) by eddy-current based on magnetic fields from magnets to said brake drum (8), comprising a brake drum (8) connected to a rotational shaft (2), at least one movable magnet support tube (25) disposed internally of said brake drum (8), a number of magnets (15) connected to the outer peripheral surface of said magnet support tube (25) in a circumferentially equally spaced relation, a outer guide tube (22) located between said magnets (15) and said brake drum (8) and having magnetic plates disposed at a plurality of first portions (41) opposite to said magnets (15), **characterised by**, said outer guide tube (22) is formed of stainless steel as a magnetic material, and a plurality of second portions (41 a), which are thinner than the first portions (41) and not opposite to said magnets (15) and are dissolved and rapidly cooled from a high temperature state in excess of 800°C into a non-magnetic or weak magnetic austenite phase.

2. The eddy-current deceleration apparatus according to claim 1, wherein an area of the outer surfaces of said portions of said outer guide tube opposite to the inner peripheral surface of said brake drum is made narrower than that of the inner surfaces of said portions of said outer guide tube opposite to said magnets.

3. The eddy-current deceleration apparatus according to claims 1 and 2, wherein an annular member formed of a good conductor such as copper is connected to at least one end of the inner peripheral surface of said brake drum not opposite to said outer guide tube.

## Patentansprüche

1. Wirbelstrom-Bremsgerät, bei welchem die Bremskraft in der Bremstrommel (8) durch Wirbelstrom aufgrund von Magnetfeldern erzeugt wird, die von Magneten zur Bremstrommel (8) verlaufen, welches eine Bremstrommel (8) aufweist, die mit einer drehbaren Welle (2) verbunden ist, sowie mindestens ein bewegliches Rohr (25) zur Abstützung der Magnete, welches im Inneren der Bremstrommel (8) angeordnet ist, ferner eine Reihe von Magneten (15), die mit der außenliegenden Umfangsfläche des Rohres (25) zur Abstützung der Magnete in einer in Umfangsrichtung gleich beabstandeten Beziehung verbunden sind, ein außenliegendes Führungsrohr (22), das sich zwischen den Magneten (15) und der Bremstrommel (8) befindet und Magnetplatten aufweist, die an einer Vielzahl erster Abschnitte (41) gegenüber den Magneten (15) angeordnet sind, **dadurch gekennzeichnet, daß** das außenliegende Führungsrohr (22) aus Edelstahl als magnetischem Werkstoff hergestellt ist und daß eine Vielzahl von zweiten Abschnitten (41a) vorgesehen ist, die dünner als die ersten Abschnitte (41) sind und den Magneten (15) nicht gegenüberliegen und von einem Zustand mit hoher Temperatur von mehr als 800° C rasch zu einer nichtmagnetischen bzw. schwachmagnetischen Phase abgekühlt sind.

2. Wirbelstrom-Bremsgerät nach Anspruch 1. bei welchem eine Fläche der außenliegenden Flächen der Abschnitte des außenliegenden Führungsrohres, die sich der innenliegenden Umfangsfläche der Bremstrommel gegenüber befinden, schmaler ausgebildet ist als die Fläche der innenliegenden Flächen der Abschnitte des außenliegenden Führungsrohres, welche den Magneten gegenüber liegen.

3. Wirbelstrom-Bremsgerät nach den Ansprüchen 1 und 2, bei welchem ein aus einem gut leitenden Werkstoff wie Kupfer hergestelltes ringförmiges Teil mit mindestens einem Ende der innenliegenden Umfangsfläche der Bremstrommel verbunden ist, welche dem außenliegenden Führungsrohr nicht gegenüberliegt.

## Revendications

1. Dispositif de décélération à courants de Foucault, dans lequel une force de freinage est engendrée dans le tambour de frein (8) par des courants de Foucault d'après des champs magnétiques provenant d'aimants sur ledit tambour de frein (8), comprenant un tambour de frein (8) relié à un arbre rotatif (2), au moins un tube mobile de support d'aimants (25) étant disposé à l'intérieur dudit tambour de frein (8), un certain nombre d'aimants (15) étant reliés à la surface périphérique extérieure dudit tube de support d'aimants (25) en une relation également espacée sur la circonférence, un tube de guidage extérieur (22) étant situé entre lesdits aimants (15) et ledit tambour de frein (8) et comportant des plaques magnétiques disposées au niveau d'une pluralité de premières parties (41) opposées auxdits aimants (15), **caractérisé par le fait que** ledit tube de guidage (22) est formé d'acier inoxydable en tant que matériau magnétique et une pluralité de secondes parties (41a), qui sont plus minces que les premières parties (41) et ne sont pas opposées auxdits aimants (15) et sont amenées en solution et rapidement refroidies depuis un état de haute température au-dessus de 800 °C en une phase d'austénite non magnétique ou faiblement magnétique.

2. Dispositif de décélération à courants de Foucault selon la revendication 1, dans lequel une zone des surfaces extérieures desdites parties dudit tube de guidage extérieur opposées à la surface périphérique intérieure dudit tambour de frein est rendue plus étroite que celles des surfaces intérieures desdites parties dudit tube de guidage extérieur opposées auxdits aimants.

3. Dispositif de décélération à courants de Foucault selon les revendications 1 et 2, dans lequel un élément annulaire formé d'un bon conducteur, tel que du cuivre, est relié à au moins une extrémité de la surface périphérique intérieure dudit tambour de frein qui n'est pas opposée audit tube de guidage extérieur.
